# EUROPÄISCHE PATENTSCHRIFT

(11) **EP 2 922 644 B1**
(45) Veröffentlichungstag und Bekanntmachung des Hinweises auf die Patenterteilung: **19.10.2016**
(21) Anmeldenummer: 13794904.6
(22) Anmeldetag: 21.11.2013
(51) Int. Cl.: B07B 1/28, B07B 1/42, F16C 35/04, F16C 27/06

(54) **SCHWINGSIEBMASCHINE MIT EINEM EXZENTERANTRIEB**
VIBRATOY SCREENING MACHINE WITH ECCENTRIC DRIVE
MACHINE DE TAMISAGE VIBRANTE AVEC ACTIONNEMENT EXCENTRIQUE

(30) Priorität: 23.11.2012 DE 102012111362
(43) Veröffentlichungstag der Anmeldung: 30.09.2015
(73) Patentinhaber: Haver & Boecker oHG, 59302 Oelde (DE)
(72) Erfinder: HEINRICH, Rüdiger, 59510 Lippetal (DE); EVERWAND, Torsten, 59494 Soest (DE)
(74) Vertreter: Kleine, Hubertus
(86) Internationale Anmeldenummer: PCT/EP2013/074379
(87) Internationale Veröffentlichungsnummer: WO 2014/079925

(56) Entgegenhaltungen:
- DE-C- 631 372
- US-A- 2 066 362
- US-A- 2 141 145
- US-A- 2 439 267
- US-A- 2 897 023

## Beschreibung

Die Erfindung betrifft eine Schwingsiebmaschine mit einem Exzenterantrieb über eine Antriebswelle, die in Außenlageranordnungen gelagert ist, die an einem Traggestell der Schwingsiebmaschine befestigt sind, und die in Innenlageranordnungen gelagert ist, die an einem Siebkasten der Schwingsiebmaschine festgelegt sind, wobei die Antriebswelle zumindest in den Innenlagern exzentrisch angeordnet ist. Die Außenlageranordnungen weisen jeweils mindestens ein Lager auf, das innerhalb eines äußeren, mit einer unteren und einer oberen Lagerschale zweiteilig ausgebildeten Lagergehäuses in zumindest radialer Richtung elastisch gehalten ist.

Derartige Schwingsiebmaschinen, auch Vibrationssiebmaschinen genannt, werden beispielsweise zur Klassierung, zur Vorabscheidung, Entwässerung oder zur Fremdkörperabsiebung eingesetzt. Schwingsiebmaschinen mit einem Exzenterantrieb werden dabei insbesondere für große Materialströme eingesetzt, beispielsweise in Steinbrüchen, um Steine, die eine vorgegebene Größe bereits unterschreiten, aus einem primären Materialstrom heraus zu sortieren, so dass nur größere Steinbrocken einem sogenannten Brecher zugeführt werden müssen.

Es sind Schwingsiebmaschinen mit Exzenterantrieb bekannt, bei denen die Antriebswelle nur im Innenlager exzentrisch angeordnet ist und das Außenlager starr an dem Traggestell festgelegt ist. Vorteilhaft ist dabei, dass der Siebkasten und entsprechend ein oder mehrere daran befestigte Siebdecks eine definierte Kreisbewegung als Vibrationsbewegung durchführen, die vorteilhaft für den Siebprozess ist. Weiterhin zeichnet sich eine solche Siebmaschine durch einen einfachen mechanischen Aufbau des Antriebs aus. Nachteilig ist, dass die Siebmaschine nicht vollständig dynamisch ausgewuchtet ist und entsprechend starke Vibrationsschwingungen über das Traggestell in einem tragenden Untergrund oder eine tragende Unterkonstruktion einbringt. Weiterhin ist nachteilig, dass Stöße auf die Siebdecks, beispielsweise durch große auftreffende Gesteinsbrocken, ungedämpft über die Lager in den Rahmen abgeleitet werden. Dadurch entstehende Lastspitzen können sowohl Innen- und Außenlager, wie auch die Antriebswelle und das Traggestell bis hin zur Zerstörung schädigen.

Als eine weitere Bauform einer Schwingsiebmaschine mit Exzenterantrieb ist der sogenannte Doppelexzenter bekannt, bei dem die Antriebswelle sowohl in den Innen- als auch in den Außenlagern exzentrisch gelagert wird. Bei dem Doppelexzenterantrieb ist das Außenlager nicht starr mit dem Traggestell verbunden, sondern auf einer Konsole, die gegenüber dem Traggestell schwingfähig gelagert ist. Dabei wird die Konsole üblicherweise mit Feder- und/oder Dämpferpaketen gelagert, die identisch zu denen sind, mit denen der Siebkasten schwingfähig auf dem Traggestell montiert ist. Vorteilhaft ist dabei, dass die Anordnung vollständig dynamisch ausgewuchtet ist und weniger starke Vibrationsschwingungen in den Untergrund bzw. ein Untergestell einbringt. Die das Außenlager tragende federnde Konsole nimmt zudem Stöße auf, die auf die Siebdecks und damit den Siebkasten, die Antriebswelle und die Lager ausgeübt werden. Der gesamte Antriebsstrang wird so vor Beschädigungen geschützt und kann kleiner dimensioniert werden als im Fall des Einfachexzenterantriebs. Auch das Traggestell kann aufgrund der geringeren Vibrationsbelastung weniger robust und damit kostengünstige ausgelegt werden. Dem steht als Nachteil gegenüber, dass die von den Siebdecks ausgeführte Kreisschwingung bis zu einem gewissen Grad lastabhängig ist und damit bei großen Lasten der Schwingkreis beeinträchtigt werden kann. Weiterhin ist nachteilig, dass die zusätzlich über die Federn und/oder Dämpfer gelagerte, dass Außenlager tragende Konsole aufwendig und materialintensiv und damit kostensteigernd aufgrund des Platzbedarfs der zusätzlichen schwingend gelagerten Konsole ist. Zudem ist der Zugang zu den Lagern und/oder anderen Komponenten des Antriebs erschwert, wodurch sich Wartungsarbeiten verkomplizieren.

Die Druckschrift US 2,066,362 beschreibt eine Schwingsiebmaschine mit Exzenterantrieb, bei der die Außenlageranordnungen Lager aufweisen, die innerhalb eines äußeren Lagergehäuses mittels Federn elastisch gehalten sind, um auf die Konsole wirkende Kräfte zu verringern. Die Druckschrift DE 631 372 offenbart ebenfalls ein elastische Lagerung für eine Schwingsiebmaschine. Dabei ist zwischen einem Lagerhalter und einem Außenring eines Lagers eine elastische Einlage in Form eines flachen Streifens eingefügt. Axial wirkende Kräfte können von diesen Lageranordnungen nicht aufgenommen werden.

Die Druckschrift US 2,439,267 zeigt ein Lager, das von elastischen Ringsegmenten umgeben und dadurch elastisch gelagert ist. Es sind zwei Ringsegmente vorgesehen, die jeweils in die obere und untere Lagerschale eingelegt werden. Um auch axiale Kräfte aufnehmen zu können, ist ein Lager mit einem ballig geformten Außenlagerring vorgesehen.

Aus der Druckschrift US 2,141,145 ist ein Lager bekannt, das von zwei torusförmigen Lagerringen elastisch gehalten wird. Das Lager ist als zweireihiges Kegelrollenlager ausgebildet, das zwei spezielle Außenlagerringe aufweist, mit denen es an den Lagerringen anliegt. Die Lagerringe sind seitlich durch Scheiben fixiert, die in eine Nut im Lagergehäuse eingesetzt sind, wodurch das Lager auch Axialkräfte aufnehmen kann. Der Zusammenbau der Lageranordnung ist dadurch jedoch aufwändig.

Die Druckschrift US 2,897,023 beschreibt ein Lager, das in einem speziell geformten elastischer Lagerblock aufgenommen ist. Axialkräfte können auch hier nicht aufgenommen werden.

Es ist eine Aufgabe der vorliegenden Erfindung, eine Schwingsiebmaschine mit Exzenterantrieb der eingangs genannten Art anzugeben, die im Hinblick auf eine kostengünstige Fertigung und hohe Wartungsfreundlichkeit möglichst einfach aufgebaut ist. Insbesondere soll auf eine große und mechanisch aufwendige Konsole zur schwingungsfähigen Lagerung des Außenlagers verzichtet werden können und die Außenlageranordnungen sollen leicht montierbar sein und auch axial wirkende Kräfte aufnehmen können.

Diese Aufgabe wird gelöst durch eine Schwingsiebmaschine mit den Merkmalen des unabhängigen Anspruchs. Vorteilhafte Ausgestaltungen und Weiterbildungen sind in den abhängigen Ansprüchen angegeben.

Eine erfindungsgemäße Schwingsiebmaschine der eingangs genannten Art zeichnet sich dadurch aus, dass die Außenlageranordnungen jeweils mindestens ein Lager aufweisen, das innerhalb eines Lagergehäuses in radialer und axialer Richtung durch mindestens zwei das Lager umgebenden elastische Lagerringe elastisch gehalten ist, wobei die elastischen Lagerringe in einem montierten Zustand im äußeren Lagergehäuse komprimiert sind. Durch die Verwendung von zwei Lagerringen kann der Zusammenbau der Außenlageranordnung vereinfacht werden, insbesondere wenn ein v-förmiges äußeres Profil bei dem inneren Lagergehäuse vorgesehen ist und/oder wenn eine Vorspannung bei den Lagerringen vorgesehen ist.

Durch die im Lagergehäuse integrierte elastische Halterung des Lagers können die Vorteile einer innerhalb gewisser Grenzen nachgiebigen Außenlagerung der Antriebswelle umgesetzt werden, ohne das eine platzbenötigende und aufwendige schwingungsfähig gelagerte Konsole benötigt wird, auf der ein Lagergehäuse mit starr montiertem Außenlager festgelegt ist. Durch die elastische Lagerung können Stöße, z.B. durch große Gesteinsbrocken, die auf Siebdecks fallen, wirksam abgefangen werden. Zudem können dynamische Radialkräfte, die auf das Außenlager wirken, aufgenommen werden. Solche dynamische Radialkräfte können beispielsweise von einem nicht vollständigen dynamischen Kräfteausgleich zwischen einem Siebkasten und Schwunggewichten, die exzentrisch an einer Antriebswelle der Schwingsiebmaschine montiert sind, herrühren. Ein derartiger nicht vollständiger dynamischer Kräfteausgleich kann bewusst vorgenommen werden, um damit die Kräfte auf das Traggestell der Schwingsiebmaschine kompensieren zu können, die von der federnden Lagerung des Siebkastens eingebracht werden. Auf diese Weise wird erreicht, dass das Traggestell der Schwingsiebmaschine weitestgehend schwingungsfrei ist. Dadurch, dass der elastische Lagerring in dem montierten Zustand der Lagerung im äußeren Lagergehäuse komprimiert ist, erfährt sein elastisches Material eine Vorspannung. Auf diese Weise werden materialschädigende Zugspannungen in dem mindestens einen elastischen Lagerring verhindert.

Das Lager ist in ein inneres Lagergehäuse eingefasst, wobei der mindestens eine Lagerring zwischen dem äußeren Lagergehäuse und dem inneren Lagergehäuse angeordnet ist. Das Profil des inneren Lagergehäuses ist dabei im . äußeren Bereich an den Querschnitt der Lagerringe im Innenbereich angepasst ist. Bevorzugt ist das Profil des inneren Lagergehäuses im äußeren Bereich v-förmig. Auf diese Weise wird eine radiale und axiale elastische Lagerung des Lagers erzielt, wobei unter anderem durch eine gewählte Neigung des Profils das Verhältnis der Elastizität in den beiden Richtungen beeinflusst werden kann.

Die Lagerschalen weisen innen ein Profil aufweisen, das an den Querschnitt des mindestens einen Lagerrings im Außenbereich angepasst ist. Bevorzugt wird das Material des mindestens einen elastischen Lagerrings durch ein Verschrauben der Lagerschalen miteinander komprimiert. So kann die Vorspannung, durch die materialschädigende Zugspannungen in dem mindestens einen elastischen Lagerring verhindert werden, auf einfache Art aufgebracht werden.

In einer weiteren vorteilhaften Ausgestaltung der Schwingsiebmaschine weist der mindestens eine elastische Lagerring einen elastischen Grundkörper mit verstärkten Außenflächen auf. Der elastische Grundkörper kann dabei bevorzugt aus Gummi oder einem Elastomer geformt sein. Die verstärkten Außenflächen können bevorzugt durch aufgesetzte Metallringe gebildet sein. Durch die verstärkten Außenflächen wird eine Materialschädigung, insbesondere beim Vorspannen des Lagerrings, vermieden.

Die Erfindung wird nachfolgend anhand eines Ausführungsbeispiels mithilfe von Figuren näher dargestellt.

Die Figuren zeigen:
- Fig. 1: eine Schwingsiebmaschine mit Exzenterantrieb in einer schematischen perspektivischen Übersichtsdarstellung;
- Fig. 2: ein Teil des Exzenterantriebs der Schwingsiebmaschine aus Fig. 1 in einer perspektivischen Darstellung;
- Fig. 3: eine Seitenansicht eines Teils des Exzenterantriebs der Schwingsiebmaschine aus Fig. 1;
- Fig. 4: eine perspektivische Detaildarstellung eines Außenlagers mit geöffneten Lagergehäuse der Schwingsiebmaschine aus Fig. 1;
- Fig. 5: eine perspektivische und teilgeschnittene Detaildarstellung des Außenlagers der Fig. 4;
- Fig. 6: eine perspektivische Darstellung der elastischen Lagerringe des Außenlagers der Fig. 4 und
- Fig. 7: eine perspektivische und teilgeschnittene Darstellung der elastischen Lagerringe des Außenlagers der Fig. 4.

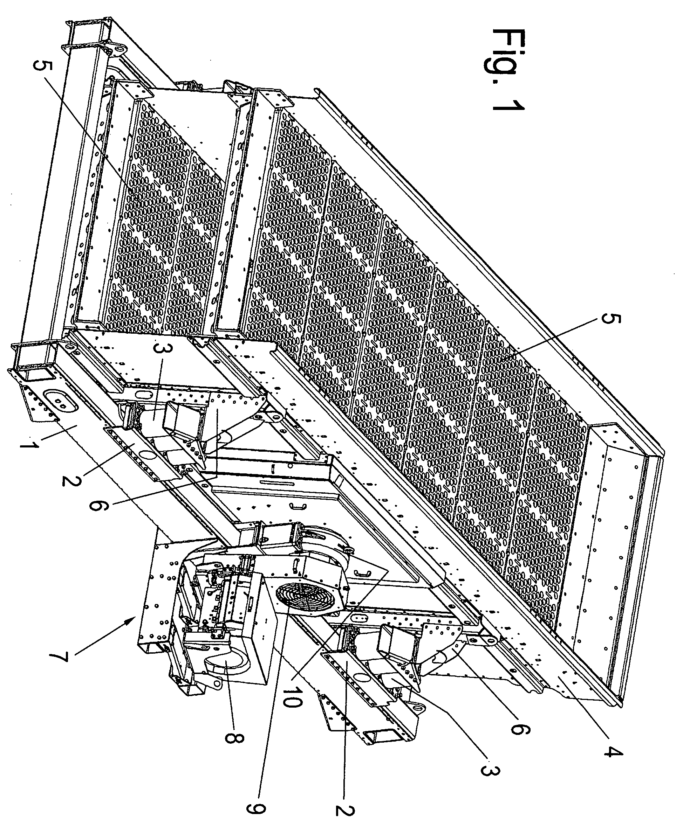

Fig. 1 zeigt ein Ausführungsbeispiel einer Schwingsiebmaschine mit Exzenterantrieb in einer perspektivischen Übersichtsdarstellung.

Die Schwingsiebmaschine weist ein rahmenartiges Traggestell 1 auf, das auf einem hier nicht dargestellten Untergrund öder Untergestell montiert ist. Das Traggestell ist in bekannter und üblicherweise gegenüber der Waagerechten gekippt, um einen Materialtransport durch die Schwingsiebmaschine zu unterstützen.

Auf jeder Seite des Traggestells 1 sind je zwei Fußpunkte 2 ausgebildet, auf denen Federpakete 3 angeordnet sind. In anderen Ausgestaltungen der Schwingsiebmaschine kann die Zahl der Fußpunkte und Federpakete auch größer als zwei sein. Die Federpakete 3 werden hier beispielhaft von je drei federnden Gummidämpfern gebildet. Neben den hier dargestellten Gummidämpfern können auch zusätzlich oder alternativ Metallfedern verwendet werden. Die Federpakete 3 tragen einen zwischen Seitenteilen des Traggestells 1 angeordneten Siebkasten 4. Dieser Siebkasten 4 weist zwischen zwei Seitenwänden hier beispielhaft zwei übereinander angeordnete Siebdecks 5 auf. Auf diese Siebdecks 5 wird ein Siebbelag, beispielsweise wie hier dargestellt ein Lochblech, oder auch ein Siebgitter oder ein Siebgewebe eingelegt, das der Absiebung bzw. Klassierung eines auf das obere der Siebdecks 5 aufgebrachten Materialstroms dient. Die übereinander angeordneten Siebdecks 5 ermöglichen dabei in bekannter Weise die Klassierung unterschiedlicher Korngrößen in einem Arbeitsgang. Der Siebkasten 4 weist an den genannten Seitenwänden Federkonsolen 6 auf, mit denen der Siebkasten 4 auf den Federpaketen 3 aufliegt. Die Federpakete 3 dienen so einer schwingfähigen Lagerung des Siebkastens 4.

In Längsrichtung gesehen ist im mittleren Bereich des Siebkastens 4 ein Exzenterantrieb 7 angeordnet. In der Darstellung der Fig. 1 ist von dem Exzenterantrieb 7 ein Antriebsmotor 8 zu erkennen, der über einen hier nicht sichtbaren Triebriemen und ein hinter einer Abdeckung 9 angeordnetes Triebrad eine Antriebswelle des Exzenterantriebs 7 in Drehbewegung versetzt. Die Antriebswelle ist an beiden Seiten in je einer Außenlageranordnung 10 gelagert, die am Traggestell 1 montiert ist.

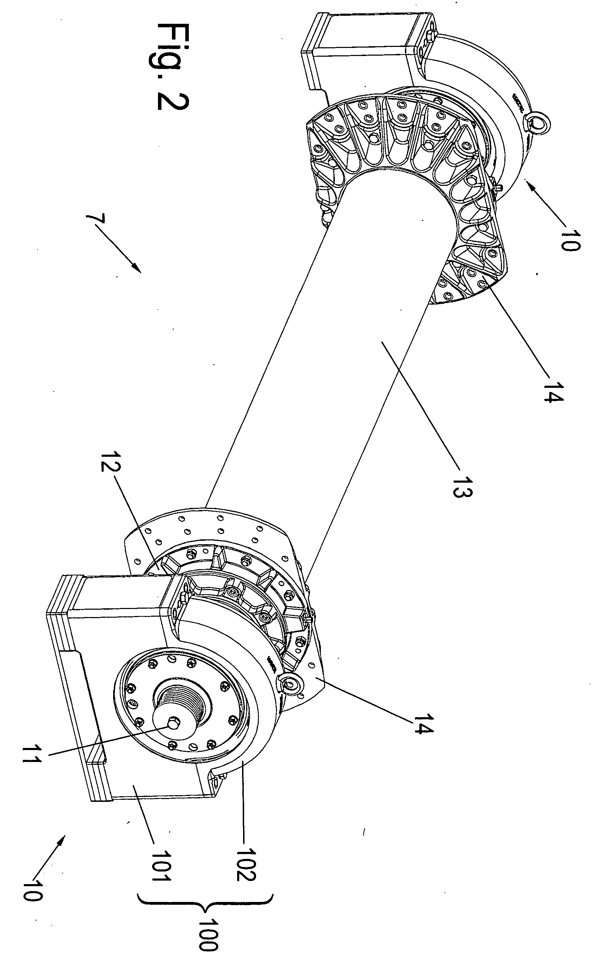

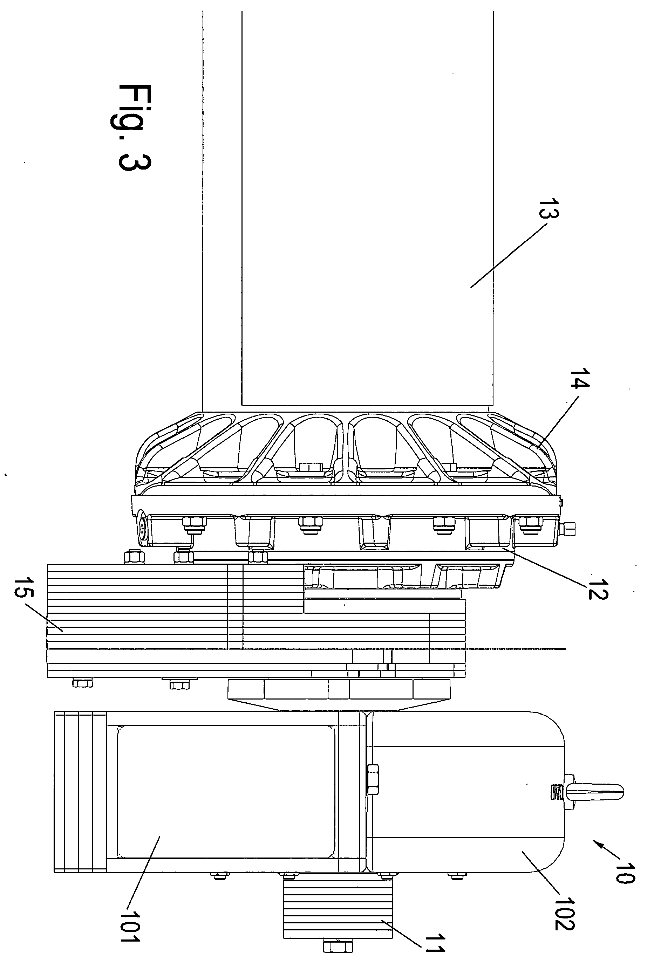

In den Fig. 2 und 3 sind Komponenten des Exzenterantriebs 7 in einer perspektivischen Darstellung (Fig. 2) bzw. einer Seitenansicht (Fig. 3) separat und detaillierter dargestellt. Der in Fig. 1 erkennbare Antriebsmotor 8 sowie das sich hinter der Abdeckung 9 verbergende Triebrad sind in den Fig. 2 und 3 nicht wiedergegeben. Sichtbar ist jedoch im rechten Bereich der Fig. 2 das Ende der genannten Antriebswelle, die hier das Bezugszeichen 11 trägt. In dem sichtbaren Endbereich der Antriebswelle 11 ist das Triebrad mit dieser Antriebswelle verbunden. Neben den Außenlageranordnungen 10 verläuft die Antriebswelle 11 durch zwei Innenlageranordnungen 12, von denen eine in der Fig. 2 sichtbar ist.

Innerhalb der Innenlageranordnungen 12 ist die Antriebswelle 11 in je einem Innenlager exzentrisch zu einem Wellengehäuse 13 gelagert, das an seinen Enden jeweils in einen Flansch 14 übergeht, in bzw. an dem die Innenlageranordnung 12 montiert ist. Mit den Flanschen 14 ist das Wellengehäuse 13 mit den Seitenwänden des Siebkastens 4 verbunden. Bei Drehung der Antriebswelle 11 wird die Hohlsäule 13 aufgrund der exzentrischen Anordnung der Antriebswelle 11 in den Innenlagern in eine Kreisbewegung versetzt, die über die Flansche 14 auf den Siebkasten übertragen wird. Die Exzentrizität innerhalb der Innenlager liegt dabei im Bereich von einigen Millimetern, beispielsweise zwischen 3 und 10 Millimetern (mm).

Vorteilhafterweise kann die Antriebswelle 11 in den Außenlageranordnungen ebenfalls exzentrisch gelagert sein, wobei die Exzentrizität hier geringer ist, als bei den Innenlagern und beispielsweise im Bereich von 1 bis 3 mm liegt. Die exzentrische Lagerung der Antriebswelle 11 im Innen- bzw. Außenlager ist entgegengesetzt zueinander ausgeführt, derart, dass die Antriebswelle 11 möglichst dynamisch rotiert.

Zwischen der Außen- und der Innenlageranordnung 10, 12 sind zu diesem Zweck zudem exzentrisch mit der Antriebswelle 11 mitrotierende Schwunggewichte 15 vorgesehen (vgl. Fig. 3, in Fig. 2 sind die Schwunggewichte 15 aus Gründen der Übersichtlichkeit nicht dargestellt). Die Schwunggewichte 15 stellen ein Kräftegleichgewicht zum Siebkasten 4 her, so dass die Außenlageranordnungen 10 prinzipiell lastfrei sein könnten. Durch einen bewusst vorgenommenen nicht vollständigen Kräfteausgleich wird jedoch bei der erfindungsgemäßen Schwingsiebmaschine eine Schwingungsamplitude von einigen Millimetern, z.B. 1 bis 3 mm im Außenlager hervorgerufen. Den für die Schwingung erforderlichen Freiheitsgrad erhält das Außenlager durch die erfindungsgemäße in der Außenlageranordnung 10 integrierte elastische Lagerung des Außenlagers. Die Schwingung erzeugt dynamische Kräfte, die in das Traggestell 1 eingeleitet werden und die den von den Federpaketen 3 auf das Traggestell 1 übertragenen dynamischen Kräften entgegengerichtet sind. Dadurch wird das Traggestell 1 nahezu schwingungsfrei.

Wie die Fig. 2 und 3 weiter zeigen, weist die Außenlageranordnung ein äußeres Lagergehäuse 100 auf, das zweiteilig mit einer unteren Lagerschale 101 und einer damit verschraubten oberen Lagerschale 102 ausgebildet ist. In der unteren Lagerschale 101 sind Befestigungslöcher zur Befestigung des Lagergehäuses 100 vorgesehen.

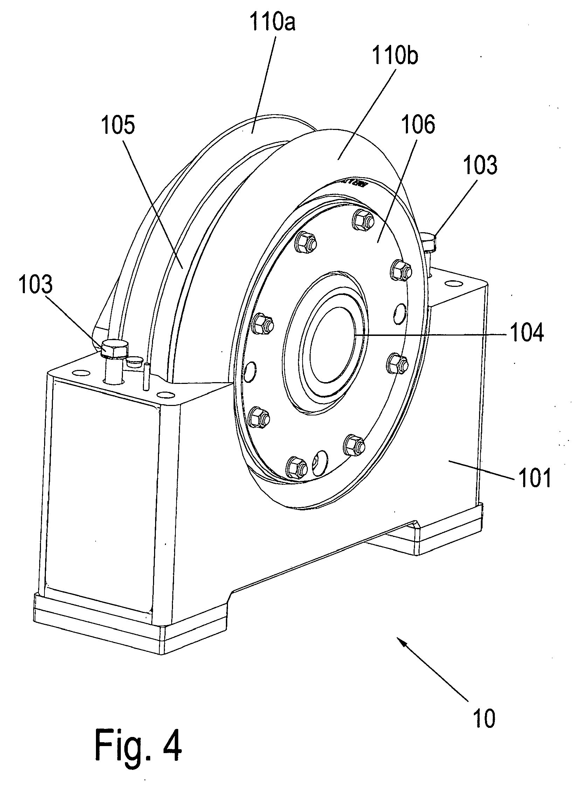

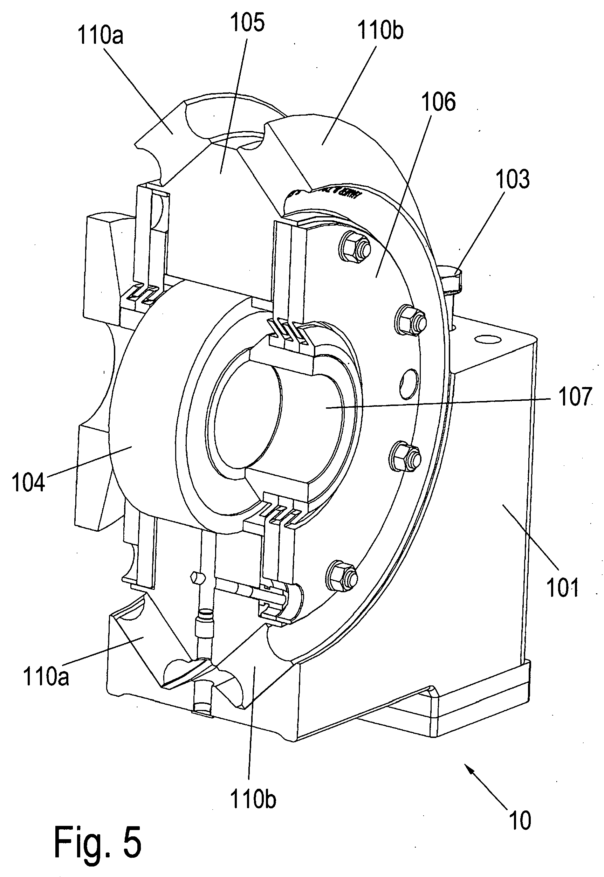

In den Fig. 4 und 5 ist die Außenlageranordnung 10 gemäß den Fig. 1 bis 3 detaillierter dargestellt. Fig. 4 ist eine perspektivische Darstellung, Fig. 5 eine perspektivische und zudem teilgeschnittene Darstellung. In beiden Figuren ist die obere Lagerschale 102 des Lagergehäuses 100 entfernt. Erkennbar sind hier Schrauben 103, mit denen die obere Lagerschale 102 mit der unteren Lagerschale 101 verbunden wird.

Die Außenlageranordnung 10 umfasst ein Lager 104, hier beispielhaft ein Wälzlager, das in ein inneres Lagergehäuse 105 fest eingepasst ist. Weiter ist ein Dichtlabyrinth vorgesehen, mit äußeren Ringen 106 (dargestellt in den Fig. 4 und 5) und inneren Ringen 107, die nur in der Fig. 5 wiedergegeben sind. Kanäle für eine Fettschmierung sind im unteren Bereich der Fig. 5 zu sehen.

An seinem äußeren Umfang weist das innere Lagergehäuse 105 ein v-förmiges Profil mit zwei nach außen gerichteten schrägen umlaufenden Flächen. Wie aus Fig. 5 an der unteren Lagerschale 101 ersichtlich ist, ist die innere Seite des äußeren Gehäuses 100 mit einem Profil versehen, das umlaufend schräg nach innen gerichtete Flächen aufweist, in im Wesentlichen parallel zu den nach außen gerichteten schrägen umlaufenden Flächen des inneren Lagergehäuses ausgerichtet sind.

Konzentrisch zum Lager 104 ist das innere Lagergehäuse 105 vollumfänglich von zwei elastischen Lagerringen 110a, 110b umgeben, die jeweils zwischen den schrägen umlaufenden Flächen des inneren bzw. äußeren Lagergehäuses 105, 100 angeordnet sind. Die elastischen Lagerringe 110a, 110b ermöglichen eine insbesondere radiale Verschiebung des Lagers 104 gegenüber dem äußeren Lagergehäuse 100. Zudem kann eine zumindest geringe axiale Bewegungsfreiheit für das Lager 104 gegeben sein. Über die gewählte Neigung der Flächen kann das Verhältnis der Elastizität in den beiden Richtungen axial und radial beeinflusst werden.

Im Rahmen der Anmeldung dient die radiale elastische Lagerung der Aufnahme von Stößen, die durch eingebrachtes Siebgut auf den Siebkasten 4 wirken und über die Antriebswelle 11 auf das Lager 104 übertragen werden. Zudem können dynamische Radialkräfte auf das Lager 104 von der elastischen Lagerung durch die beiden Lagerringe 110a, 110b aufgenommen werden. Solche dynamische Radialkräfte können aufgrund eines nicht vollständigen dynamischen Kräfteausgleichs zwischen dem Siebkasten 4 und den Schwunggewichten 15 und/oder einer exzentrischen Anordnung der Antriebswelle 11 im Innenlager und/oder im Lager 104 herrühren. Um insbesondere bei den dynamischen radialen Verschiebungen des Lagers 104 eine materialschädigende Zugbelastung auf die elastischen Lagerringe 110a, 110b zu vermeiden, sind die elastischen Lagerringe 110a, 110b im montierten Zustand der Lageranordnung komprimiert. Bei dem dargestellten Ausführungsbeispiel ist vorgesehen, dass ein Zusammendrücken des Materials der elastischen Lagerringe 110a, 110b beim Zusammensetzen der Lagerschalen 101, 102 des Lagergehäuses 100 erfolgt. Dieses wird durch eine entsprechende Dimensionierung der elastischen Lagerringe 110a, 110b relativ zur Größe des Sitzes für die elastischen Lagerringe 110a, 110b in der unteren bzw. oberen Lagerschale 101, 102 erreicht. Die Vorspannung kann dann durch das Anziehen der Schrauben 103 aufgebaut werden.

Im dargestellten Ausführungsbeispiel sind zwei voneinander beabstandete Lagerringe 110a, 110b vorgesehen. Im zwischen den Lagerringen 110a, 110b liegenden Bereich ist in dem äußeren Lagergehäuse 100 eine nach innen gerichtete Wölbung ausgebildet, die als ein Anschlag für das innere Lagergehäuse 105 wirkt, wenn das Lager 104 zu weit radial ausgelenkt wird. In alternativen Ausgestaltungen können die Lagerringe 110a, 110b jedoch auch so ausgebildet sein, dass kein Freiraum für einen Anschlag gebildet wird. Es kann auch vorgesehen sein, nur einen einzelnen zentralen Lagerring zu verwenden.

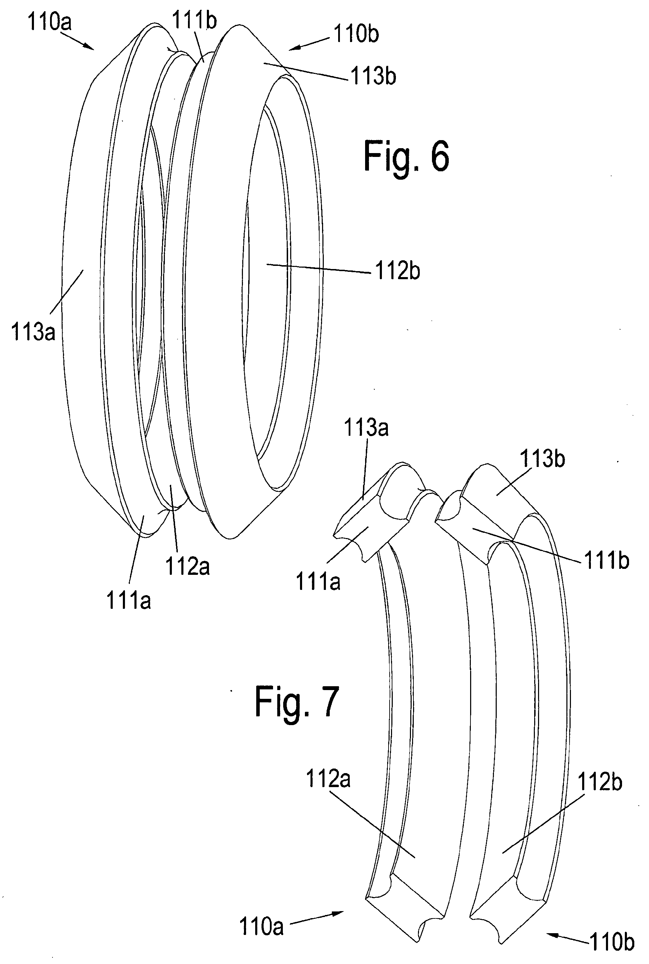

In den Fig. 6 und 7 sind ist die elastischen Lagerringe 110a, b der Fig. 3 und 4 separat perspektivisch dargestellt. Fig. 7 zeigt die Lagerringe 110a, b dabei geschnitten. Die elastischen Lagerringe 110a, b besteht hier jeweils aus einem elastischen Grundkörper 111 a, b, beispielsweise ist dieser aus einem Gummi oder einem gummiartigen Elastomer gefertigt. Der elastische Grundkörper 111a, b ist ringförmig als ein Torus ausgebildet, mit schrägen Innen- und Außenflächen. An der jeweiligen schrägen Innenfläche ist der elastische Grundkörper 110 mit einem konusförmigen inneren Metallring 112 verbunden, beispielsweise durch einen Vulkanisationsprozess. An den schrägen Außenflächen sind konusförmige äußere Metallringe 113 aufgebracht, beispielsweise ebenfalls durch einen Vulkanisationsprozess. Die Metallringe 112, 113 schützen die Flächen der elastischen Grundkörper 111 a, b, insbesondere wenn die Lagerringe 110a, b zwischen dem äußeren und dem inneren Lagergehäuse 100, 105 vorgespannt montiert werden. An den nicht an den Lagergehäusen 100, 105 anliegenden Seiten sind die Grundkörper 111a, b konvex ausgebildet, um auch bei einer Kompression der Lagerringe 110a, b möglichst keine Zugkräfte im Material aufkommen zu lassen.

### Bezugszeichenliste

- 1: Traggestell
- 2: Fußpunkt
- 3: Federpaket
- 4: Siebkasten
- 5: Siebdeck
- 6: Federkonsole
- 7: Exzenterantrieb
- 8: Antriebsmotor
- 9: Triebradabdeckung
- 10: Außenlageranordnung
- 11: Antriebswelle
- 12: Innenlageranordnung
- 13: Wellengehäuse
- 14: Flansch

- 100: äußeres Lagergehäuse
- 101: untere Lagerschale
- 102: obere Lagerschale
- 103: Schraube
- 104: Lager
- 105: inneres Lagergehäuse
- 106: äußerer Ring des Dichtlabyrinths
- 107: innerer Ring des Dichtlabyrinths

- 110a, b: elastischer Lagerring
- 111a, b: elastischer Grundkörper
- 112a, b: innerer Metallring
- 113a, b: äußerer Metallring

## Patentansprüche

1. Schwingsiebmaschine mit einem Exzenterantrieb über eine Antriebswelle (11), die in Außenlageranordnungen (10) gelagert ist, die an einem Traggestell (1) der Schwingsiebmaschine befestigt sind, und die in Innenlageranordnungen (12) gelagert ist, die an einem Siebkasten (4) der Schwingsiebmaschine befestigt sind, wobei die Antriebswelle zumindest in den Innenlageranordnungen (12) exzentrisch angeordnet ist, wobei die Außenlageranordnungen (10) jeweils mindestens ein Lager (104) aufweisen, das innerhalb eines äußeren, mit einer unteren und einer oberen Lagerschale (101, 102) zweiteilig ausgebildeten Lagergehäuses (100) in zumindest radialer Richtung elastisch gehalten ist, **dadurch gekennzeichnet, dass** das Lager (104) in ein inneres Lagergehäuse (105) eingefasst ist und durch zwei umgebende elastische Lagerringe (110a, 110b) elastisch gehalten ist, wobei die elastischen Lagerringe (110a, 110b) jeweils ein Torus mit schrägen Außen- und Innenflächen sind, die zwischen dem äußeren Lagergehäuse (100) und dem inneren Lagergehäuse (105) angeordnet sind und die in einem montierten Zustand im äußeren Lagergehäuse (100) komprimiert sind, wobei ein Profil des inneren Lagergehäuses (105) im äußeren Bereich an den Querschnitt der Lagerringe (110a, 110b) im Innenbereich angepasst ist und die Lagerschalen (101, 102) innen ein Profil aufweisen, das an den Querschnitt der Lagerringe (110a, 110b) im Außenbereich angepasst ist.

2. Schwingsiebmaschine nach Anspruch 1, bei der die elastischen Lagerringe (110a, 110b) einen elastischen Grundkörper (111a, 111b) mit verstärkten Außenflächen aufweisen.

3. Schwingsiebmaschine nach Anspruch 1, bei der der elastische Grundkörper (111a, 111 b) aus Gummi oder einem Elastomer geformt ist.

4. Schwingsiebmaschine nach Anspruch 2 oder 3, bei der die verstärkten Außenflächen durch aufgesetzte Metallringe (112a, 113a, 112b, 113b) gebildet sind.

5. Schwingsiebmaschine nach einem der Ansprüche 1 bis 4, bei der das Profil des inneren Lagergehäuses (105) im äußeren Bereich v-förmig ist.

6. Schwingsiebmaschine nach einem der Ansprüche 1 bis 5, bei der das Material der elastischen Lagerringe (110) durch ein Verschrauben der Lagerschalen (101, 102) miteinander komprimiert wird.

7. Schwingsiebmaschine nach einem der Ansprüche 1 bis 6, bei der die Antriebswelle (11) auch in den Lagern (104) der Außenlageranordnungen (10) exzentrisch angeordnet ist.

8. Schwingsiebmaschine nach Anspruch 7, bei der eine Exzentrizität in den Außenlageranordnungen (10) um einen Faktor 3 bis 10 kleiner ist als in den Innenlageranordnungen (12).

9. Schwingsiebmaschine nach einem der Ansprüche 1 bis 8, bei der die Außenlageranordnungen (10) unmittelbar mit dem Traggestell (1) verbunden, beispielsweise verschraubt sind.

## Claims

1. A vibrating screen machine, comprising an eccentric drive connected via a driveshaft (11) which is mounted in outer bearing arrangements (10) on a supporting frame (1) of the vibrating screen machine and which is mounted in inner bearing arrangements (12) fixed to a screen box (4) of the vibrating screen machine, wherein the driveshaft is arranged eccentrically at least in the inner bearing arrangements (12), wherein the outer bearing arrangements (10) each comprise at least one bearing (104) which is held within an outer bearing housing (100) in an elastic manner at least in the radial direction, said bearing housing being formed in two parts with a bottom and an upper bearing shell (101, 102), **characterized in that** the bearing (104) is set in an inner bearing housing (105) and is held in an elastic manner by two surrounding elastic bearing rings (110a, 110b), wherein the elastic bearing rings (110a, 110b) are each a torus with oblique outer and inner surfaces which are arranged between the outer bearing housing (100) and the inner bearing housing (105), and are compressed in the outer bearing housing (100) in a mounted state, wherein a profile of the inner bearing housing (105) is adjusted in the outer region to the cross-section of the bearing rings (110a, 110b) in the inner region, and the bearing shells (101, 102) inwardly have a profile which is adjusted to the cross-section of the bearing rings (110a, 110b) in the outer region.

2. A vibrating screen machine according to claim 1, wherein the elastic bearing rings (110a, 110b) have an elastic base body (111 a, 111 b) with reinforced outer surfaces.

3. A vibrating screen machine according to claim 1, wherein the elastic base body (111 a, 111 b) is formed of rubber or an elastomer.

4. A vibrating screen machine according to claim 2 or 3, wherein the reinforced outer surfaces are formed by fitted metal rings (112a, 113a, 112b, 113b).

5. A vibrating screen machine according to one of the claims 1 to 4, wherein the profile of the inner bearing housing (105) is V-shaped in the outer region.

6. A vibrating screen machine according to one of the claims 1 to 5, wherein the material of the elastic bearing rings (110) is compressed by bolting the bearing shells (101 102) to each other.

7. A vibrating screen machine according to one of the claims 1 to 6, wherein the driveshaft (11) is also eccentrically arranged in the bearings (104) of the outer bearing arrangements (10).

8. A vibrating screen machine according to claim 7, wherein an eccentricity in the outer bearing arrangements (10) is smaller by a factor of 3 to 10 than in the inner bearing arrangements (12).

9. A vibrating screen machine according to one of the claims 1 to 8, wherein the outer bearing arrangements (10) are connected directly to the support frame (1), e.g. bolted together with said frame.

## Revendications

1. Machine à tamis vibrant avec un entraînement excentrique sur un arbre d'entraînement (11) supporté sur des dispositifs d'appui extérieurs (10), qui sont fixés sur un bâti de support (1) de la machine à tamis vibrant, et sur des dispositifs d'appui intérieurs (12) qui sont fixés sur un caisson de tamis (4) de la machine à tamis vibrant, dans laquelle l'arbre d'entraînement est disposé de façon excentrique au moins dans les dispositifs d'appui intérieurs (12), dan laquelle les dispositifs d'appui extérieurs (10) présentent chacun au moins un palier (104) qui est retenu de façon élastique au moins dans le sens radial dans un corps de palier (100) formé en deux parties avec un coussinet inférieur et un coussinet supérieur (101, 102), **caractérisée en ce que** le palier (104) est renfermé dans un corps de palier (105) et retenu de façon élastique par deux bagues de palier élastiques (110a, 110b) qui l'entourent, les bagues de palier élastiques (110a, 110b) étant chacune un tore à surfaces extérieures et intérieures obliques, disposé entre le corps de palier extérieur (100) et le corps de palier intérieur (105) et comprimé dans l'état monté dans le corps de palier extérieur (100), un profil du corps de palier intérieur (105) étant adapté, dans la partie extérieure, à la section des bagues de palier (110a, 110b) dans la partie intérieure et les coussinets (101, 102) présentent sur l'intérieur un profil adapté à la section des bagues de palier (110a, 110b) dans la partie extérieure.

2. Machine à tamis vibrant selon la revendication 1, dans laquelle les bagues de palier élastiques (110a, 110b) présentent un corps de base élastique (111a, 111b) avec des surfaces extérieures renforcées.

3. Machine à tamis vibrant selon la revendication 1, dans laquelle le corps de base élastique (111a, 111b) est formé à partir de caoutchouc ou d'un élastomère.

4. Machine à tamis vibrant selon la revendication 2 ou 3, dans laquelle les surfaces extérieures renforcées sont formés par des bagues métalliques (112a, 113a, 112b, 113b) posées dessus.

5. Machine à tamis vibrant selon l'une des revendications 1 à 4, dans laquelle le profil du corps de palier intérieur (105) est en forme de V dans la partie extérieure.

6. Machine à tamis vibrant selon l'une des revendications 1 à 5, dans laquelle le matériau des bagues de palier élastiques (110) est comprimé par un vissage des coussinets (101, 102) l'un avec l'autre.

7. Machine à tamis vibrant selon l'une des revendications 1 à 6, dans laquelle l'arbre d'entraînement (11) est disposé aussi de façon excentrique dans les paliers (104) des dispositifs d'appui extérieurs (10).

8. Machine à tamis vibrant selon la revendication 7, dans laquelle l'excentricité des dispositifs d'appui extérieurs (10) est plus petite d'un facteur 3 à 10 que celle des dispositifs d'appui intérieurs (12).

9. Machine à tamis vibrant selon l'une des revendications 1 à 8, dans laquelle les dispositifs d'appui extérieurs (10) sont reliés directement au bâti de support (1), par exemple vissés.
